# EUROPEAN PATENT APPLICATION

(11) **EP 1 906 052 A2**
(43) Date of publication of application: **02.04.2008**
(21) Application number: 07116981.7
(22) Date of filing: 21.09.2007
(51) Int. Cl.: F16H 7/12, F16H 7/14, F16H 7/08

(54) **Load dependent belt tensioner**

(30) Priority: 28.09.2006 US 847799 P; 21.08.2007 US 894379
(71) Applicant: Delphi Technologies, Inc., Troy, Michigan 48007 (US)
(72) Inventor: Collier-Hallmann, Steven J., Frankenmuth, MI 48734 (US); Zuraski, Jeffrey A., Saginaw, MI 48603 (US); Pattok, Eric D., Frankenmuth, MI 48734 (US)
(74) Representative: Denton, Michael John

(57) **Abstract**

A belt tensioner apparatus (60, 90, 120, 150, 180, 210, 260, 290) is provided for a pulley assembly having an input pulley (34) rotatably connected to an output pulley (36) via a flexible belt (42). The tensioner apparatus includes a belt contact device (66, 92, 152, 214) engaged with a first portion (42a) of the belt (42) and also engaged with a second portion (42b) of the belt (42) different from the first portion of the belt (42). The belt contact device (66, 92, 152, 214) is coupled to a base (96, 156, 212, 264) so as to enable movement of the belt contact device (66, 92, 152, 214)with respect to the base (96, 156, 212, 264), such that the belt contact device (66, 92, 152, 214) moves against the second portion (42b) of the belt (42) responsive to a tension force created in the first portion (42a) of the belt by rotation of the input pulley (34), to create a tension force in the second portion (42b) of the belt.

## Description

### TECHNICAL FIELD

The present invention relates generally to belt tensioner apparatuses for tensioning a flexible belt connecting pulleys in a pulley system and, more particularly, to a belt tensioning system for use with an electric power steering system.

### BACKGROUND OF THE INVENTION

Most vehicles include steering systems in which the driver of the vehicle turns the vehicle wheels via rotation of a steering wheel. Sometimes, rotation of the steering wheel rotates a steering column which is connected to a steering gear assembly. The steering gear assembly is coupled to the vehicle wheels. Rotation of the steering wheel to adequately turn the vehicle may be difficult depending on various factors, such as the speed of the vehicle and the mechanical coupling of the steering system. Therefore, many vehicles include power assisted steering systems which assist the driver in steering the vehicle.

One type of power steering system is an electric power steering system in which the assisting force is derived from the output of an electric motor. A sensor is connected to the steering wheel or steering column to determine the desired assisted force which is delivered by the electric motor. The electric power steering system may be configured such that the output of the electric motor acts upon the steering wheel column or components of the steering gear assembly to provide the assisting force.

Many different types of drive mechanisms may be used to transfer the output of the electric motor to the steering gear assembly. One method is to use a system of pulleys connected by a flexible belt or chain. One pulley (the input pulley) is connected to the output of the electric motor, and another pulley (the output pulley) is connected to the steering gear assembly. The belt may be a flat belt, a cog belt, or a vee belt.

Although the use of a flexible belt is generally sufficient, belt drives generally require some means of maintaining tension in the belt. Common methods of achieving and maintaining the required belt tension involve either pre-tensioning the system or adding spring-loaded tensioner(s). Pre-tensioning can be achieved by adjusting the center-to-center distance between the input and output pulleys until a desired initial tension is obtained. However, this method is sensitive to belt creep and it can produce excessive friction when the pulley system is lightly loaded. Further, this method can negatively impact belt durability since high belt tension exists at all times. This is because the belt and other drive components have finite compliance. As the system load increases, the belt stretches and the tension in the slack side decreases until the belt starts to slip. In order for pre-tensioning to function properly, the initial tension must be great enough that the tension in the slack side does not decrease below a required minimum as the belt stretches under load.

Spring loaded idler pulleys are also well known in the art. This concept uses a spring loaded idler pulley on the slack side of the belt to apply a nearly constant tension as the belt stretches under load. Because the idler works best on the slack side of the belt, and because the slack side changes with the direction of rotation of the input pulley two spring-loaded idlers with reversing drives may be required. Although this system requires less preload than a pre-tensioned system, the tension required is still relatively high. The initial preload in this case needs to be greater than the required minimum slack side tension at maximum load.

### SUMMARY OF THE INVENTION

In accordance with one aspect of the present invention, a tensioner apparatus is provided for a pulley assembly having an input pulley rotatably connected to an output pulley via a flexible belt. The tensioner apparatus includes a member coupled to a fixed base so as to enable rotation of the member about an axis with respect to the base. One of the input pulley and the output pulley is mounted on the member so as to enable a distance between a center of the input pulley and a center of the output pulley to vary responsive to a tension force exerted on the belt by the input pulley.

In another aspect of the present invention, a tensioner apparatus is provided for a pulley assembly having an input pulley rotatably connected to an output pulley via a flexible belt. The tensioner apparatus includes a belt contact device engaged with a first portion of the belt and also engaged with a second portion of the belt different from the first portion of the belt. The belt contact device is coupled to a base so as to enable movement of the belt contact device with respect to the base, such that the belt contact device moves against the second portion of the belt responsive to a tension force created in the first portion of the belt by rotation of the input pulley, to create a tension force in the second portion of the belt.

In yet another aspect of the present invention, a tensioner apparatus is provided for a pulley assembly having an input pulley rotatably connected to an output pulley via a flexible belt. The tensioner apparatus includes an member coupled to a base so as to enable rotation of the member about an axis with respect to the base, One of the input pulley and the output pulley is mounted on the member so as to enable movement of the one of the input pulley and the output pulley against a portion of the belt responsive to a tension force created in another portion of the belt by rotation of the input pulley.

### BRIEF DESCRIPTION OF THE DRAWINGS

FIG. 1 is a perspective view of an electric power steering system.
FIG. 2 is a schematic view of a belt tensioning system in accordance with a first embodiment of the present invention.
FIG. 3 is a schematic view of a belt tensioning system in accordance with a second embodiment of the present invention.
FIG. 4 is a schematic view of a belt tensioning system in accordance with a third embodiment of the present invention.
FIG. 5 is a schematic view of a belt tensioning system in accordance with a fourth embodiment of the present invention.
FIG. 6 is a schematic view of a belt tensioning system in accordance with a fifth embodiment of the present invention.
FIG. 7 is a schematic view of a belt tensioning system in accordance with a sixth embodiment of the present invention.
FIG. 8 is a schematic view of a belt tensioning system in accordance with a seventh embodiment of the present invention.
FIG. 9 is a schematic view of a belt tensioning system in accordance with an eighth embodiment of the present invention.
FIG. 10 is a schematic view of a belt tensioning system in accordance with a ninth embodiment of the present invention.

### DESCRIPTION OF THE PREFERRED EMBODIMENT

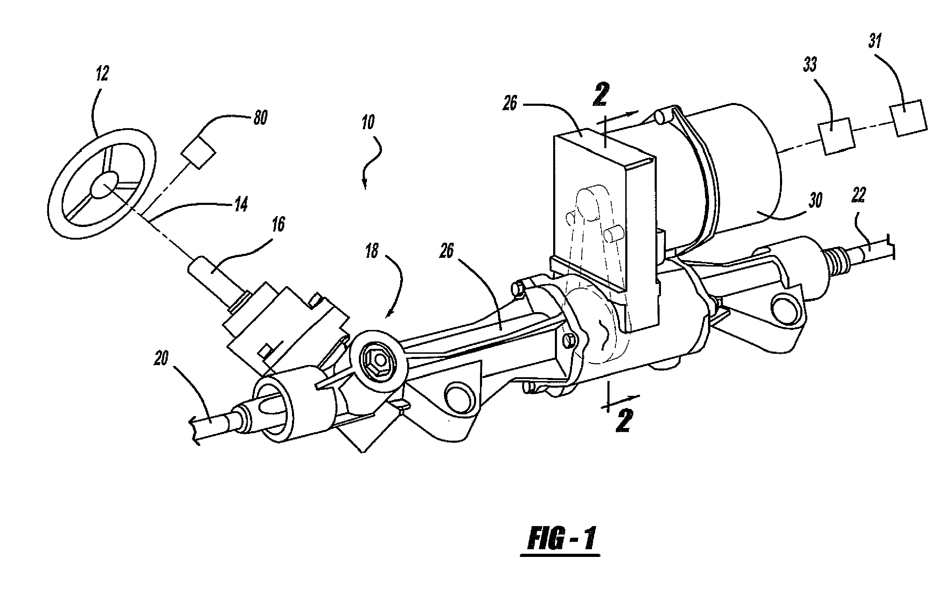

Referring now to the drawings, there is illustrated in FIG. 1 an electric power steering system, generally designated 10. The system 10 includes a steering wheel 12 operated by the driver of a vehicle. The steering wheel 12 is connected to an end of a steering column, indicated schematically at 14. Rotation of the steering wheel 12 rotates the steering column 14. The other end of the steering column 14 is connected to an input shaft 16 of a steering gear assembly, indicated generally at 18. The steering gear assembly 18 transfers rotational movement of the input shaft 16 into linear movement of tie rods 20 and 22 extending from ends of the steering gear assembly 18. The tie rods 20 and 22 are connected to vehicle wheels (not shown) such that linear movement of the tie rods causes steering rotation of the wheels.

The steering gear assembly 18 can be any suitable mechanism for converting the rotational movement of the input shaft 16 into linear movement of the tie rods 20 and 22. One such example of a suitable steering gear assembly is shown and described in U.S. Pat. No. 6145400, which is incorporated by reference herein. The tie rods 20 and 22 are connected to a steering member (not shown) which translates within a bore formed in a housing 26 of the steering gear assembly 18. The steering member includes a rack portion (not shown) having a series of rack teeth formed therein which meshingly engage with a pinion gear (not shown) coupled to the input shaft 16. Rotation of the pinion gear moves the rack portion of the steering member 24 in a linear direction. Movement of the steering member 24 causes linear movement of the tie rods, thereby turning the wheels.

The assembly 10 further includes a drive unit, such as an electrical motor 30. The drive unit effects axial movement of the steering member to provide an assisting force in addition to the manual force input from the driver via the steering wheel 12, the steering column 14, and the steering gear assembly 18. In the event of the inability of the electric motor 30 to effect axial movement of the steering member, the mechanical connection between the input member 16 and the steering member permits manual steering of the vehicle. The motor 30 is connected to an electrical power source 31 via a controller 33. The power source 31 can be any suitable power source such as the vehicle's battery or the electrical charging system. The motor 30 is actuated and controlled by the controller 33 for providing the desired rotational speed and rotational direction of the output shaft of the motor 30. The controller 33 can be any suitable mechanism, such as a microprocessor, which can vary the speed of the motor 30 as well as the rotational direction of the motor 30 corresponding to the steering direction of the wheels.

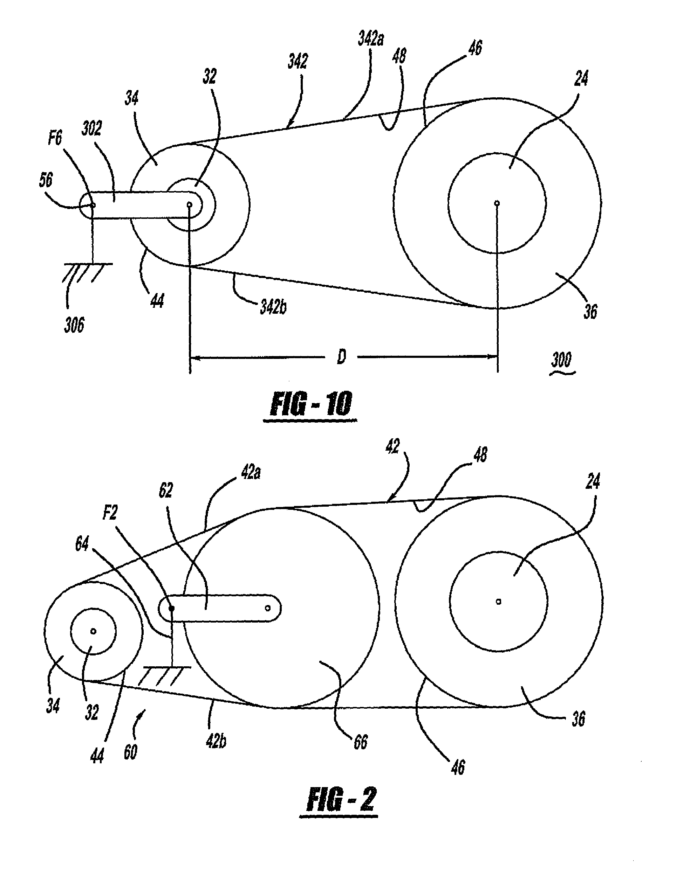

FIG. 2 shows a belt-tensioning system incorporating a pulley assembly, in accordance with a first embodiment of the present invention. Referring to FIGS. 1 and 2, the motor 30 includes an output shaft 32 rotatably coupled to an input pulley 34 of the pulley assembly. An output pulley 36 of the pulley assembly is rotationally engaged with a ball nut assembly (not shown). The ball nut assembly is rotationally engaged with the screw portion of the steering member previously described. The ball nut assembly can be any suitable ball nut assembly, such as that described in U.S. Pat. No. 6145400, which is incorporated by reference herein.

Pulleys 34 and 36 are rotatably connected to each other via a flexible belt 42. Each of the pulleys 34 and 36 has an outer surface 44 and 46, respectively, which engages an inner face 48 of the belt 42. The surfaces 44 and 46 of the pulleys 34 and 36 and the inner face 48 of the belt 42 can have any suitable contour or texture to help ensure a gripping contact between the belt 42 and the pulleys 34 and 36. For example, the surfaces 44 and 46 of the pulleys and the inner face 48 of the belt 42 can include toothed mating notches formed therein.

The belt 42 is fit relatively snugly about the outer circumferences of the pulleys 34 and 36. Thus, rotational movement of the input pulley 34 causes rotation of the output pulley 36. The diameters of the pulleys 34 and 36 can be any suitable dimension for providing any desired "gear ratio", such that the rotational speed of the input pulley 34 is different from the rotational speed of the output pulley 36. As shown in FIG. 2, the looping of the belt 42 about the input pulley 34 and the output pulley 36 define two unsupported belt sides or portions 42a and 42b extending between the pulleys 34 and 36. The term "unsupported side" refers to portions of the belt 42 which are not in contact with the pulleys 34 and 36.

The belt 42 may be made from any suitable material or combination of materials flexible enough to loop around pulleys 34 and 36 and maintain engagement with the outer surfaces of the pulleys 34 and 36 during rotation thereof. The belt may be a vee belt or a cog belt, or the belt may be made of individual links forming a chain. The belt 42 may be made of an elastomeric material, and may include internal metallic reinforcing members.

FIGS. 2-9 show various embodiments of a tensioner apparatus in accordance with the present invention. Generally, the tensioner apparatuses shown in FIGS. 2-9 include a belt contact device engaged with both a first portion 42a of belt 42 and a second portion 42b of the belt different from the first portion of the belt. The belt contact device is coupled to a base (in the case of a tensioning device used in a vehicle, a portion of the vehicle) so as to enable movement of the belt contact device with respect to the base, such that belt contact device moves against second belt portion 42b responsive to a tension force created in belt first portion 42a by rotation of input pulley 34. Any base to which the belt contact device is coupled will generally be fixed with respect to the belt contact device (or any components thereof) during operation of the tensioning system, so as to provide a static base for movement of the belt contact device thereabout. This movement of the belt contact device against second belt portion 42b creates a tension force in the second portion of the belt (i.e., the slack side of the belt) as the load on the belt increases.

In the embodiments of the present invention incorporating a belt contact device separate from the input and output pulleys, both the tension and slack sides of the belt are displaced significantly by the belt contact device from a straight-line configuration extending tangent to the input and output pulleys when the system is unloaded. As rotation of input pulley 34 applies a tension load to belt 42, forces exerted on the belt contact device by the tensioned portion of the belt cause the belt contact device to move in the direction of the slack side of the belt, thereby exerting a force on the slack side of the belt responsive to the tension force in the tensioned belt portion, and increasing the tension in the slack side of the belt. As a load is applied to the belt by input pulley 34, the displacement of the tension side of the belt from the straight-line configuration is reduced, and the displacement of the slack side of the belt increases. In addition, the total length of the belt increases as the idler(s) move(s) in response to a load applied to the belt by rotation of the input pulley. In this way, a desired predetermined minimum belt tension is maintained in the slack side under all operating conditions. With proper configuration of the geometry and stiffness of the system, a required predetermined slack side belt tension can be maintained up to a predetermined design torque.

Referring again to FIG. 2, in a particular embodiment, a tensioner apparatus 60 includes a member 62 coupled to an arm 64 of the vehicle so as to enable rotation of the member about an axis F2 with respect to the portion of the vehicle. In addition, belt contact device 66 is a pulley mounted on member 62 so as to enable rotation of pulley about the axis F2. Upon application of a tension force to belt 42 by input pulley 34, a force is exerted on pulley 66, causing the pulley mounted on member 62 to pivot about arm axis F2, driving the pulley toward belt second portion 42b (i.e., the slack side of the belt). In turn, pulley 66 exerts a force on belt second portion 42b, causing tension in the belt second portion to increase.

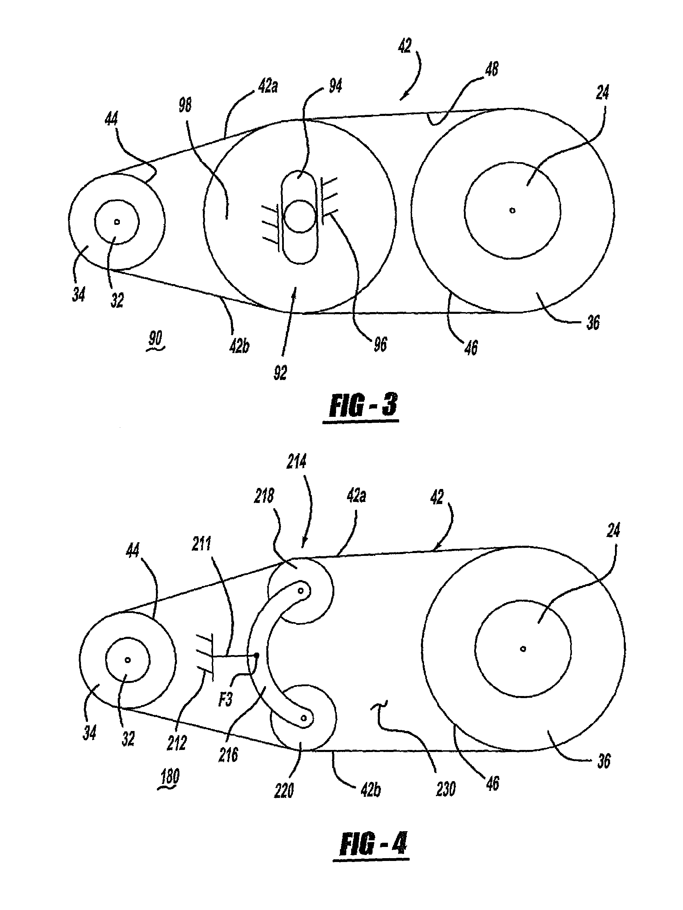

Referring to FIGS. 3, 5, and 8, in other embodiments 90, 120, 150 of the tensioner apparatus, the belt contact device is coupled to a portion of the vehicle so as to enable sliding movement of the belt contact device with respect to the portion of the vehicle.

In the particular embodiment 90 shown in FIG. 3, belt contact device 92 includes a sliding member 94 slidingly coupled to the portion 96 of the vehicle, and a pulley 98 mounted on sliding member 94 so as to rotate with respect to the sliding member. Pulley 98 is in contact with both belt first portion 42a and belt second portion 42b. Upon application of a tension force to belt 42 by input pulley 34, a force is exerted on pulley 98, causing the pulley mounted on sliding member 94 to translate along a sliding axis of the sliding member, driving the pulley toward belt second portion 42b (i.e., the slack side of the belt). In turn, pulley 98 exerts a force on belt second portion 42b, causing tension in the belt second portion to increase.

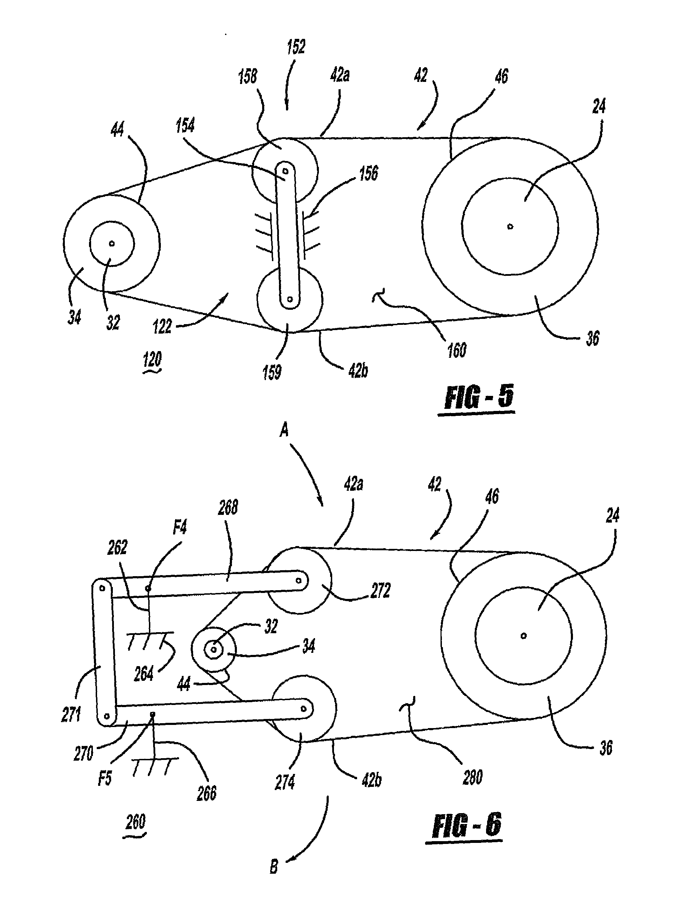

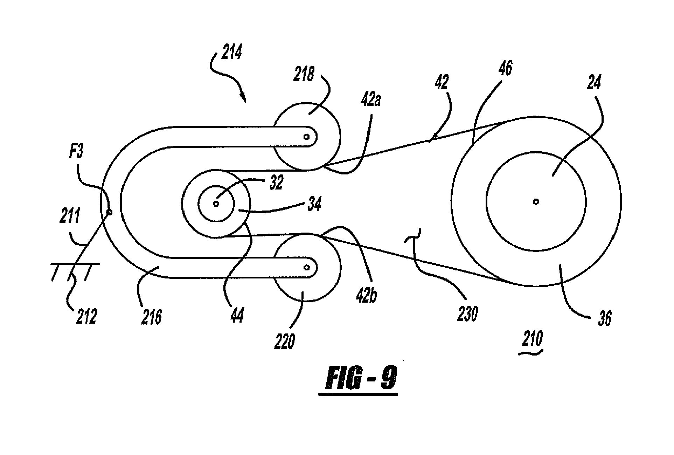

Referring to FIGS. 5 and 8, in other embodiments 120, 150 of the tensioner apparatus, belt contact device 152 includes a member 154 slidingly coupled to a portion 156 of the vehicle, a first pulley 158 mounted on member 154 so as to rotate with respect to the member, and a second pulley 159 mounted on member 154 so as to rotate with respect to the member. In addition, first pulley 158 is in contact with belt first portion 42a and second pulley 159 is in contact with belt second portion 42b. Upon application of a tension force to belt 42 by input pulley 34, a force is exerted on pulley 158, causing the sliding member 154 to which the pulley is coupled to translate along the sliding axis of the sliding member. This drives pulley 159 (mounted on another portion of the sliding member) toward belt second portion 42b (i.e., the slack side of the belt). In turn, pulley 159 exerts a force on belt second portion 42b, causing tension in the belt second portion to increase.

In the particular embodiment shown in FIG. 8, first pulley 158 and second pulley 159 are both positioned outside a perimeter 160 defined by belt 42, to act on the exterior of the belt. In another particular embodiment, shown in FIG. 5, first pulley 158 and second pulley 159 are both positioned inside the perimeter 160 defined by belt 42.

Referring to FIGS. 4 and 9, in other embodiments 180, 210 of the tensioner apparatus, an arm 211 is affixed to the portion of the vehicle, and belt contact device 214 is mounted on the arm so as to enable rotation of the belt contact device about an axis F3 extending through the arm.

In the embodiments 180, 210 shown in FIGS. 4 and 9, belt contact device includes a member 216 mounted on arm 211 so as to enable rotation of the member with respect to the arm, a first pulley 218 mounted on member 216 so as to rotate with respect to the member, and a second pulley 220 mounted on member 216 so as to rotate with respect to the member. In addition, first pulley 218 is in contact with belt first portion 42a and second pulley 220 is in contact with belt second portion 42b. Upon application of a tension force to belt 42 by input pulley 34, a force is exerted on pulley 218, causing the belt contact device (including pulleys 218, 220 and member 216) to rotate about arm axis F3. This rotation drives pulley 220 toward belt second portion 42b (i.e., the slack side of the belt). In turn, pulley 220 exerts a force on belt second portion 42b, causing tension in the belt second portion to increase.

In the particular embodiment 180 shown in FIG. 4, first pulley 218 and second pulley 220 are both positioned within a perimeter 230 defined by belt 42. In another particular embodiment 210 shown in FIG. 9, first pulley 218 and second pulley 220 are both positioned outside the perimeter 230 defined by belt 42, to act on the exterior of the belt.

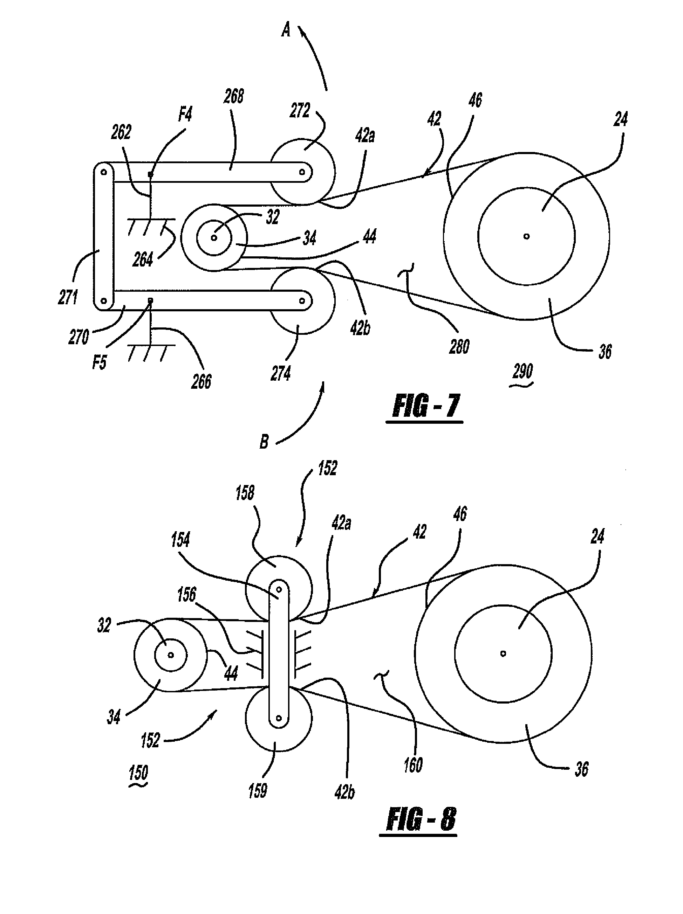

Referring to FIGS. 6 and 7, other embodiments 260, 290 of the tensioner apparatus include a first arm 262 coupled to a portion 264 of the vehicle so as to enable rotation of the first arm about a first axis F4 with respect to the portion of the vehicle, and a second arm 266 coupled to a portion of the vehicle so as to enable rotation of the second arm about a second axis F5 with respect to the portion of the vehicle. Belt contact device includes a first member 268 mounted on first arm 262 so as to enable rotation of first member 268 with respect to first arm 262. A second member 270 is mounted on second arm 266 so as to enable rotation of the second member with respect to the second arm. A linkage 271 is rotatably coupled to both first member 268 and second member 270. The linkage connects first member 268 to second member 270 such that the second member is movable in conjunction with the first member and responsive to movement of the first member. A first pulley 272 is mounted on first member 268 so as to rotate with respect to the first member, and a second pulley 274 is mounted on second member 270 so as to rotate with respect to the second member. First pulley 272 is in contact with belt first portion 42a and second pulley 274 is in contact with belt second portion 42b.

Upon application of a tension force to belt 42 by input pulley 34, a force is exerted on first pulley 272, causing first pulley to move in a direction indicated by arrow A. This motion of first pulley 272, through the connection established by first member 268, linkage 271, and second member 270, causes second pulley 274 to move in a direction indicated by arrow B, toward belt second portion 42b (i.e., the slack side of the belt). In turn, pulley 274 exerts a force on belt second portion 42b, causing tension in the belt second portion to increase.

In the particular embodiment shown in FIG. 6, first pulley 272 and second pulley 274 are both positioned outside a perimeter 280 defined by belt 42, to act on the exterior of the belt. In another particular embodiment, shown in FIG. 7, first pulley 272 and second pulley 274 are both positioned inside the perimeter 280 defined by belt 42.

FIG. 10 shows yet another embodiment 300 of a belt tensioner apparatus for the pulley assembly. In the embodiment shown in FIG. 10, tensioner apparatus 300 includes a member 302 coupled to a portion 306 of the vehicle so as to enable rotation of the member 302 about an axis F6 with respect to the portion of the vehicle. In the embodiment shown in FIG. 10, member 302 is pivotally mounted to a base 306 by a pivot pin 56. Pivot pin 56 defines pivot axis F6 about which the member pivots relative to base 306. One of input pulley 34 and output pulley 36 is mounted on member 302 so as to enable movement of the pulley such that the pulley is urged against one of belt portions 42a or 42b (depending on the direction of rotation of input pulley 34) responsive to a tension force created in the other portion of the belt by rotation of the input pulley. In another aspect of the embodiment shown in FIG. 10, one of input pulley 34 and output pulley 36 is mounted on member 302 so as to enable a distance between a center of the input pulley and a center of the output pulley to vary responsive to a tension force exerted on belt 42 by the input pulley.

In this embodiment of the present invention, idler pulleys are not used. Either input pulley 34 or output pulley 36 is allowed to change its center location relative to the other pulley responsive to an applied torque. This is achieved by constraining the moveable pulley with member 302 as shown such that the center-to-center distance between the pulleys increases as the torque is applied. In this embodiment, a flexible coupling or jointed shaft arrangement is provided to connect the movable pulley to the drive motor or other drive source.

It will be appreciated that design considerations such as the distance between the tension side and slack side of the belt, the magnitude of the desired minimum slack side belt tension, the center spacing between the input and output pulleys, and the amount of compliance necessary in the elements of the system and their mountings may be iteratively harmonized to provide a system configuration usable for maintaining a predetermined minimum tension in the belt. As such, when properly informed with system performance requirements and data relating to the interactions between these and other design considerations, the actual dimensions and parameters of the system for any particular application may be appropriately and iteratively calculated and/or selected to result in a system that establishes and maintains a predetermined minimum tension in the belt.

In all of the embodiments described herein, compliance may be added to any of the system elements (such as links, idlers, pins, pulley mounts, etc.) to manage the effects of belt creep or manufacturing and/or design tolerances. This compliance may be added, for example, by providing a spring in series with any of the links, a link with adjustable geometry such as a turn buckle, or adjustable center locations for the driver or driven pulleys. In addition, compliance may be added by specifying the materials from which the tensioner apparatus elements are constructed and/or the spatial arrangement of the elements such that any of the elements inherently possess the desired compliance. These and other methods of adding compliance or adjustment to any of these embodiments would be known to one skilled in the art. However, the addition of compliance to the system elements may operate against the load transfer characteristics of the tensioning apparatus. Thus, the amount of compliance added to the system should be seek to achieve a balance between any requirements of system durability and manufacturing tolerances, and the load transfer characteristics of the tensioning apparatus necessary to achieve the desired amount of tension in the belt. This would also minimize the belt displacement required of the load transfer mechanism to achieve the desired belt tension, and would minimize any associated inertia effects.

Although the embodiments of the tensioning apparatus disclosed herein are described as they may be applied to a pulley assembly incorporated into a power steering system, the principles described herein may be applied to any pulley system where it is desired to maintain at least a predetermined minimum tension in the slack side of a belt connecting a system of pulleys.

It may be seen that the embodiments of the tensioning apparatus described herein provide several important advantages over previous designs. Slack side belt tension can be maintained just above a minimum required value up to the rated design load of the pulley system. This minimizes friction at light loads, which is important in applications such as electric power steering systems (EPS). Creep of the belt material is also minimized, which contributes to durability, reliability, and consistency of system performance over life. In addition, average bearing loads and belt loads are reduced, which further contributes to enhanced durability and reduced friction.

It will be understood that the foregoing descriptions of embodiments of the present invention are for illustrative purposes only. As such, the various structural and operational features herein disclosed are susceptible to a number of modifications commensurate with the abilities of one of ordinary skill in the art, none of which departs from the scope of the present invention as defined in the appended claims.

## Claims

1. A tensioner apparatus (300) for a pulley assembly having an input pulley (34) rotatably connected to an output pulley (36) via a flexible belt (342), the tensioner apparatus comprising a member (302) coupled to a base (306) so as to enable rotation of the member (302) about an axis (F6) with respect to the base (306), wherein one of the input pulley (34) and the output pulley (36) is mounted on the member (302) so as to enable a distance between a center of the input pulley (34) and a center of the output pulley (36) to vary responsive to a tension force exerted on the belt (342) by the input pulley (34).

2. The tensioner apparatus of claim 1 wherein the base (306) is a portion of a vehicle.

3. A vehicle incorporating a tensioner apparatus for a pulley assembly in accordance with claim 1.

4. A tensioner apparatus (60, 90, 120, 150, 180, 210, 260, 290) for a pulley assembly having an input pulley (34) rotatably connected to an output pulley (36) via a flexible belt (42), the tensioner apparatus comprising a belt contact device (66, 92, 152, 214) engaged with a first portion (42a) of the belt (42) and engaged with a second portion (42b) of the belt (42) different from the first portion of the belt (42), the belt contact device (66, 92, 152, 214) being coupled to a base (96, 156, 212, 264) so as to enable movement of the belt contact device (66, 92, 152, 214) with respect to the base, such that the belt contact device moves against the second portion (42b) of the belt responsive to a tension force created in the first portion (42a) of the belt by rotation of the input pulley (34), to create a tension force in the second portion of the belt (42b).

5. The tensioner apparatus (60, 180, 210, 260, 290) of claim 4 further comprising a member (62, 216) coupled to the base so as to enable rotation of the member (62, 216) about an axis with respect to the base, and wherein the belt contact device is mounted on the member so as to enable rotation of the belt contact device about the axis.

6. The tensioner apparatus (60, 180) of claim 5 wherein the tensioner apparatus is positioned within an enclosure (230) defined by the belt.

7. The tensioner apparatus (90, 120, 150) of claim 4 wherein the belt contact device is coupled to the base (96, 156) so as to enable sliding movement of the belt contact device with respect to the base (96, 156).

8. The tensioner apparatus of claim 7 wherein the belt contact device comprises a sliding member (94) slidingly coupled to the base (96), and a pulley (98) mounted on the sliding member so as to rotate with respect to the sliding member (94), and wherein the pulley (98) is in contact with both the first portion (42a) of the belt (42) and the second portion (42b) of the belt (42).

9. The tensioner apparatus of claim 7 wherein the belt contact device comprises a member (154) slidingly coupled to the base (156), a first pulley (158) mounted on the member (154) so as to rotate with respect to the member, and a second pulley (159) mounted on the member (154) so as to rotate with respect to the member, and wherein the first pulley (158) is in contact with the first portion (42a) of the belt (42) and the second pulley (159) is in contact with the second portion (42b) of the belt (42).

10. The tensioner apparatus of claim 9 wherein the first pulley (158) and the second pulley (159) are positioned within a perimeter (160) defined by the belt.

11. A vehicle incorporating a tensioner apparatus for a pulley assembly in accordance with claim 10.

12. The tensioner apparatus of claim 4 further comprising an arm (211) affixed to the base (212), and wherein the belt contact device is mounted on the arm (211) so as to enable rotation of the belt contact device about an axis (F3) extending through the arm (211).

13. The tensioner apparatus of claim 12 wherein the belt contact device comprises a member (216) mounted on the arm (211) so as to enable rotation of the member (216) with respect to the arm (211), a first pulley (218) mounted on the member (216) so as to rotate with respect to the member (216), and a second pulley (220) mounted on the member (216) so as to rotate with respect to the member, and wherein the first pulley (218) is in contact with the first portion (42a) of the belt (42) and the second pulley (220) is in contact with the second portion (42a) of the belt (42).

14. The tensioner apparatus of claim 13 wherein the first pulley (218) and the second pulley (220) are positioned within a perimeter (230) defined by the belt.

15. The tensioner apparatus of claim 4 further comprising:
a first arm (262) coupled to the base (264) so as to enable rotation of the first arm (262) about a first axis (F4) with respect to the base (264), and a second arm (266) coupled to the base (264) so as to enable rotation of the second arm (266) about a second axis (F5) with respect to the base, wherein the belt contact device comprises a first member (268) mounted on the first arm (262) so as to enable rotation of the first member (268) with respect to the first arm (262);
a second member (270) mounted on the second arm (266) so as to enable rotation of the second member (270) with respect to the second arm (266);
a linkage (271) rotatably coupled to the first member (268) and the second member (270), the linkage (271) connecting the first member (268) to the second member (270) such that the second member (270) is movable in conjunction with the first member (268) and responsive to movement of the first member (268);
a first pulley (272) mounted on the first member (268) so as to rotate with respect to the first member (268); and
a second pulley (274) mounted on the second member (270) so as to rotate with respect to the second member (270), wherein the first pulley (272) is in contact with the first portion (42a) of the belt (42) and the second pulley (274) is in contact with the second portion (42b) of the belt (42).

16. The tensioner apparatus of claim 15 wherein the first pulley and the second pulley are positioned within a perimeter defined by the belt.

17. A tensioner apparatus (300) for a pulley assembly having an input pulley (34) rotatably connected to an output pulley (36) via a flexible belt (342), the tensioner apparatus comprising a member (302) coupled to a base (306) so as to enable rotation of the member (302) about an axis (F6) with respect to the base (306), wherein one of the input pulley (34) and the output pulley (36) is mounted on the member (302) so as to enable movement of the one of the input pulley (34) and the output pulley (36) against a portion of the belt (42) responsive to a tension force created in another portion of the belt (42) by rotation of the input pulley (34).
